Europäisches Patentamt

European Patent Office

Office européen des brevets

(11) Publication number: **0 279 037 B1**

## EUROPEAN PATENT SPECIFICATION

(45) Date of publication of patent specification: **29.01.92**  (51) Int. Cl.⁵: **B65G 13/11**, B65G 39/12

(21) Application number: **87117387.8**

(22) Date of filing: **25.11.87**

(54) **Roller bed.**

(30) Priority: **12.12.86 IT 1260286**

(43) Date of publication of application:
**24.08.88 Bulletin 88/34**

(45) Publication of the grant of the patent:
**29.01.92 Bulletin 92/05**

(84) Designated Contracting States:
**AT BE CH DE ES FR GB GR LI LU NL SE**

(56) References cited:
WO-A-83/01607          DE-C- 1 132 051
DE-U- 7 824 151        DE-U- 8 117 576
FR-A- 1 186 523        FR-A- 2 085 199

(73) Proprietor: **GIBEN IMPIANTI S.p.A.**
**24, Via Garganelli**
**I-40065 Pianoro (Bologna)(IT)**

(72) Inventor: **Benuzzi, Piergiorgio**
**Via Angelo Custode 7**
**I-40100 Bologna(IT)**

(74) Representative: **Porsia, Bruno et al**
**c/o Succ. Ing. Fischetti & Weber Via Caffaro**
**3/2**
**I-16124 Genova(IT)**

## Description

This invention relates to a roller bed according to the pre-characterizing part of claim 1.

In the known roller beds of this kind, disclosed in FR-A-1 186 523, the rod-like spacer members interposed between the shafts of the successive rollers are stuck in the respective grooves in which the shafts of the rollers are engaged. This requires an acccurate matching of the size of the spacer members with the grooves, as well as a relatively difficult assembly and disassembly work, while it prevents the spacer members from freely sliding longitudinally in the respective grooves.

The invention aims to provide a roller bed of the type as disclosed in the pre-characterizing part of claim 1, wherein the rod-like spacer members may have a quite wide size tolerance relative to the respective grooves, so that these spacer members can be easily assembled and disassembled, and are allowed to freely slide longitudinally in said grooves.

The roller bed according to the invention is characterized by the features as stated in the characterizing part of claim 1.

Some preferred embodiments of the invention are characterized in the dependent claims.

Two examplary embodiments of the invention will be disclosed in the following detailed description by referring to the accompanying drawings, in which:

Figure 1 is a front elevational view of some files of rollers of a first embodiment of the roller bed according to the invention;

Figure 2 is a fragmentary side elevational view of a file of rollers of the roller bed of figure 1;

Figure 3 is a plan view of a portion of a file of rollers of a second embodiment of the roller bed according to the invention;

Figure 4 is a front elevational view of a file of rollers of the roller bed of figure 3.

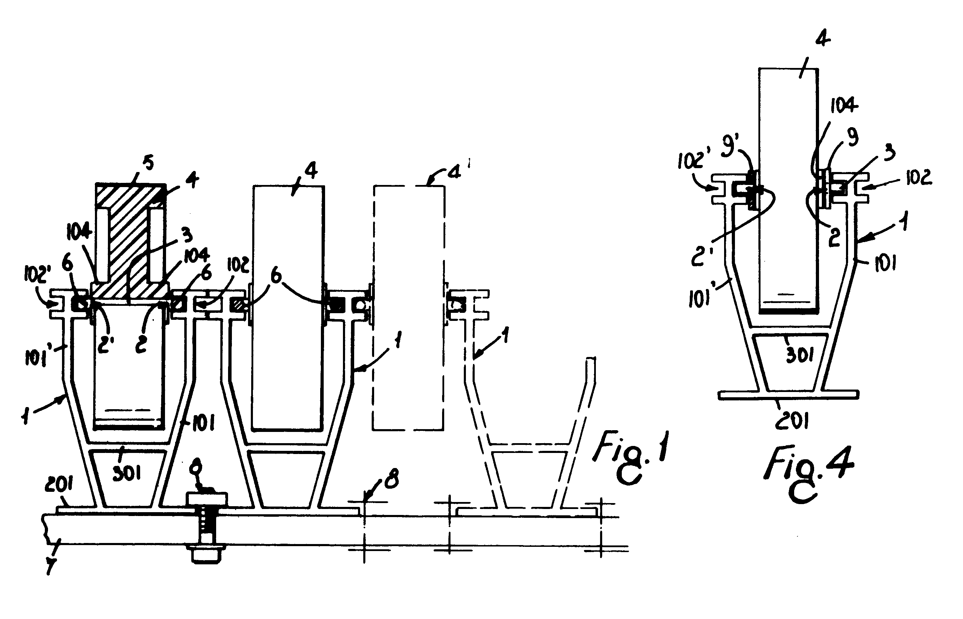

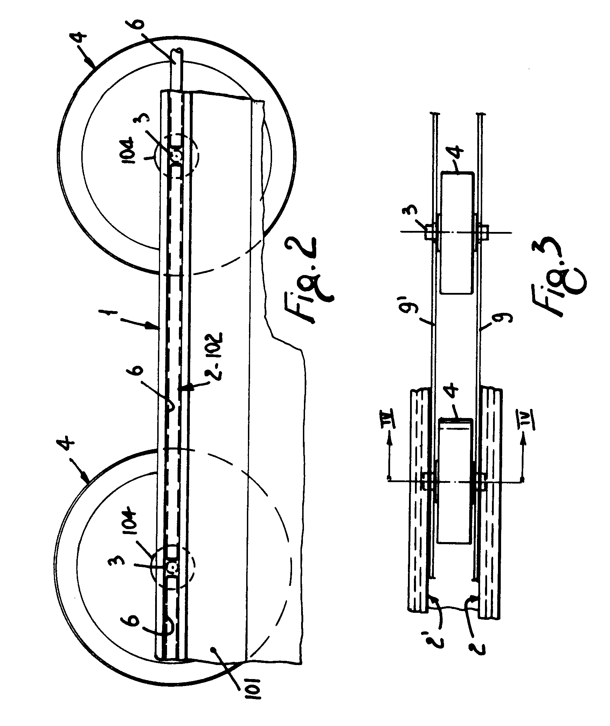

In figures 1 and 2, it will be noted that the roller bed is formed of shaped beams 1 made of an extruded aluminium alloy and, therefore, of quite accurate dimensions. The shaped beams 1 have a cup-shaped cross section, i.e. they comprise equal sides 101-101′ whose upper portions are parallel to each other and whose lower portions converge to each other downwards and are integral at the bottom ends thereof with a base 201 which may be used to secure said beams 1 in place. The numeral 301 indicates a cross member for bracing said sides 101-101′, arranged above said base 201 so as to avoid interferring with the rollers or wheels to be arranged in the shaped beam 1.

The sides 101-101′ are provided at the top thereof with longitudinal parallel ridges forming opposite grooves 2-2′ of the same dimensions, extending continuously over the entire length of the shaped beam 1. Said grooves 2-2′ are disposed on an imaginary plane parallel to said base 201.

Grooves 102-102′, equal to the grooves 2-2′ and co-planar therewith, are also provided, preferably, on the top outer portion of said sides 101-101′.

The grooves 2-2′ are so sized as to support the ends of the shafts 3 for the rollers 4 of the roller bed, said rollers being inserted into the shaped beam 1 in a single file at an end of said beam 1. The rollers 4 are made, for example, of suitable plastics material, they may be covered with such a material 5 to avoid marring the panels intended to be transferred on said rollers, and they are characterized by a hub 104 whose ends suitably protrude from the plan view outline of said rollers and extent to a short distance from the edges of said grooves 2-2′.

To space apart the shafts 3 by a pre-established distance or pitch, small rods 6 of the same length and, preferably, of round cross section are inserted between said shafts into the grooves 2-2′ and held therein by the engagement with the ends of hubs 104 of said rollers 4. Due to the round cross section of the rods 6, the contact between the latter and the hubs 104 is limited to a line and, therefore, the rotation of said rollers or wheels 4 will not be hindered at all as a result of said contact.

In order to maintain the rollers 4 in the shaped beam 1, with their shafts 3 perpendicular to the grooves 2-2′, only the shafts of both the leading roller and trailing roller 4 of each file of rollers need be fixed to said beam 1. Preferably, the shaft of the leading roller is fixed first, whereafter the intermediate rollers 4 and respective spacing rods 6 are positioned, and finally the shaft of the trailing roller is fixed, thus obtaining a "package" lock of the parts 3 and 6. The rollers 4 are freely rotatable on their shafts 3, so that the latter may be locked within the grooves 2-2′.

A plurality of roller files formed as described above can be orderly assembled parallelly and side by side on a supporting structure 7, and they are secured to the latter by means of brackets 8 acting on the bases 201 of said shaped beams 1. The beams 1 of the various roller files may be in contact with each other as shown in figure 1 with solid lines, or they may be suitably spaced from each other as shown with broken lines, for example, in order to support idle rollers 4′ on their outer grooves 102-102′.

It is to be understood that various changes and modifications, especially of constructional nature, may be made to the invention. For example, the shaped beams 1 may be of composite formation. It cannot be excluded that, for example, suitable channels for constituting the grooves 2-2′ and 102-102′ may be inserted and fixed to the wing portions of any shaped beam (even if not extruded).

The retaining action performed by the ends of the hubs of the rollers 4 on the spacing rods 6 may be performed otherwise by any means on the shaft 3 for the rollers, such as washers or spring washers.

According to a still further constructional modification, the rods 6 need not engage the ends of the hub 104, and the hub need not protrude from the sides of the rollers, if the grooves 2-2′ and 102-102′ have a dovetail outline or any other outline capable of performing a retaining action on said rods 6.

In order to space apart the shafts 3 of the rollers 4, means other than the rods 6 may be used. Figures 3 and 4 show, for example, how the shafts 3 may be spaced apart by means of plates 9-9′ apertured in accordance to the pitch, for example, by a shearing operation, which are inserted in the shaped beam 1 together with said rollers and disposed between the ends of the hubs 104 and the edges of the grooves 2 + 2′. By virtue of this solution, the drilling of the leading and trailing ends of the shaped beam 1 can be dispensed with, because it will be sufficient to affix at least one spot of said plates 9-9′ to said beam 1 and the rollers 4 will be thus maintained suitably disposed within said shaped beam 1.

Finally, it is to be understood that a plurality of rollers or wheels 4 may be rotatably mounted on a single shaft 3.

## Claims

1. A roller bed particularly for conveying platelike articles, such as, for example, panels or packs of panels of wood, or the like, in which:

   a) a plurality of idle, parallel-axis rollers (4, 4') are rotatably mounted on a supporting structure (1, 7) in one or more files extending normally to their axes,

   b) the shafts (3) of the rollers (4, 4') protrude from both ends of said rollers (4, 4'), and their end portions are inserted into a pair of parallel grooves (2, 2"; 102, 102') which are open toward each other and are formed in the sides of a pair of beams (101, 101') of the supporting structure (1, 7), which are transversely spaced apart and are arranged at the opposite sides of each file of rollers (4, 4'),

   c) the shafts (3) of the rollers (4, 4') are slidably insertable into said grooves (2, 2'; 102, 102') from one end thereof,

   d) rod-like spacer members (6) are interposed between the shafts (3) of the successive rollers (4, 4') and are disposed on at least one side of each file of rollers (4, 4'), and are accomodated in the respective groove (2, 2'; 102, 102') in which the shafts (3) of said rollers are engaged,

   characterized by retainer means which are carried by the rollers (4, 4') and at least partly overlap the mouth of the groove (2, 2'; 102, 102') and each rod-like spacer member (6) accomodated therein, over at least a portion of the length thereof, so as to prevent said rod-like spacer members (6) from escaping out of the respective groove (2, 2'; 102, 102').

2. A roller bed according to claim 1, characterized in that the retainer means of the rod-like spacer members (6) is formed by the hubs (104) of the rollers (4, 4'), said hubs (104) extending with their front surfaces to a position proximate to the mouth of said groove (2, 2'; 102, 102').

3. A roller bed according to claim 1, characterized in that the retainer means of the rod-like spacer members (6) is formed by washers, rings, flanges, or the like, provided on the shafts (3) of the rollers (4, 4') in a position proximate to the mouth of the groove (2, 2'; 102, 102').

4. A roller bed according to one or more of the preceding claims, characterized in that said supporting structure is in the form of a least one U- or V-shaped beam, the flanges (101, 101') of which constitute the beams which are provided in their inner sides with the longitudinal grooves (2, 2') facing toward each other and engagingly receiving the end portions of the shafts (3) of the rollers successively arranged between the flanges (101, 101') of said shaped beam.

5. A roller bed according to claim 4, characterized in that said U- or V-shaped beam is formed with longitudinal grooves (102, 102') also in the outer sides of its flanges (101, 101') and that at least two parallel and transversely spaced apart beams of this type (1) are provided, a file of rollers (4') being arranged between these two beams (1), with the end portions of their shafts slidably engaged in said mutually facing outer grooves (102, 102') of said two shaped beams (1).

6. A roller bed according to claims 4 or 5, characterized in that each shaped beam (1) of the supporting structure has a base flange (201) to be affixed to a supporting member (7).

7. A roller bed according to claims 4 to 6, characterized in that the shaped beams (1) of the supporting structure are made of a light alloy and, preferably, by an extrusion process.

**Revendications**

1. Structure porte-roulettes destinée en particulier à déplacer des articles analogues à des plaques, tels que, par exemple, des panneaux ou des piles de panneaux en bois, ou analogues, dans laquelle :

a) un ensemble de roulettes (4,4') à axes parallèles sont montées folles en rotation sur une structure support (1,7) en une ou plusieurs rangées orientées perpendiculairement à leurs axes,

b) les axes (3) des roulettes (4,4') sont en saillie aux deux extrémités desdites roulettes (4,4'), et leurs autres extrémités sont introduites dans une paire de rainures parallèles (2,2' ; 102,102') qui sont tournées l'une vers l'autre et sont formées dans les flancs de deux longerons (101, 101') de la structure support (1,7), qui sont espacés dans le sens transversal et disposés sur les côtés opposés de chaque rangée de roulettes (4,4'),

c) les axes (3) des roulettes (4,4') peuvent être introduits par coulissement à l'intérieur desdites rainures (2,2' ; 102,102') à partir d'une de leurs extrémités,

d) des éléments d'écartement (6) analogues à des tiges sont intercalés entre les axes (3) des roulettes successives (4,4') et sont disposés sur au moins un côté de chaque rangée de roulettes (4,4'), et sont reçus dans la rainure respective (2,2' ; 102,102') dans laquelle les axes (3) desdites roulettes sont engagés,

caractérisée en ce que des moyens de retenue sont portés par les roulettes (4,4') et empiètent au moins partiellement sur l'ouverture de la rainure (2,2' ; 102,102') et sur chaque élément d'écartement analogue à une tige (6) reçu à l'intérieur, sur au moins une partie de leur longueur, de façon à empêcher lesdits éléments d'écartement analogues à des tiges (6) de s'échapper de la rainure correspondante (2,2' ; 102,102').

2. Structure porte-roulettes selon la revendication 1, caractérisée en ce que le moyen de retenue des éléments d'écartement en forme de tige (6) est constitué par les moyeux (104) des roulettes (4,4'), lesdits moyeux (104) s'étendant avec leurs faces avant jusqu'à une position proche de l'ouverture de ladite rainure (2,2' ; 102,102').

3. Structure porte-roulettes selon la revendication 1, caractérisée en ce que le moyen de retenue des éléments d'écartement en forme de tige (6) est constitué par des rondelles, des bagues, des brides ou analogues, montés sur les axes (3) des roulettes (4,4'), dans une position proche de l'ouverture de la rainure (2,2' ; 102,102').

4. Structure porte-roulettes selon l'une ou plusieurs des revendications précédentes, caractérisée en ce que ladite structure support a la forme d'au moins une poutre en U ou en V, dont les ailes (101, 101') constituent les longerons qui portent sur leur face intérieure les rainures longitudinales (2,2') disposées face à face et recevant les parties d'extrémité des axes (3) des roulettes successivement disposées entre les ailes (101,101') de ladite poutre profilée.

5. Structure porte-roulettes selon la revendication 4, caractérisée en ce que ladite poutre en U ou en V comporte des rainures longitudinales (102, 102') également sur les flancs externes de ses ailes (101, 101') et en ce qu'au moins deux poutres parallèles et espacées dans le sens transversal de ce type (1) sont prévues, une rangée de roulettes (4') étant disposée entre ces deux poutres (1), avec les parties d'extrémité de leurs axes coulissant dans lesdites rainures extérieures face à face (102, 102') des deux poutres profilées (1) susdites.

6. Structure porte-roulettes selon la revendication 4 ou 5, caractérisée en ce que chaque poutre profilée (1) de la structure support comporte une plaque de base (201) destinée à être fixée à un élément support (7).

7. Structure porte-roulettes selon les revendications 4 à 6, caractérisée en ce que les poutres profilées (1) de la structure support sont fabriquées en alliage léger et, de préférence, par un procédé d'extrusion.

**Patentansprüche**

1. Rollengestell insbesondere zum Fördern plattenähnlicher Gegenstände, wie beispielsweise Paneele oder Pakete von Paneelen aus Holz oder dergleichen, in dem:

a) eine Mehrzahl von leerlaufenden, parallelachsigen Rollen (4, 4') drehbar in einer Tragkonstruktion (1, 7) in ein oder mehreren Reihen, die sich in einer Normalen zu ihren Achsen erstrecken, drehbar angeordnet sind,

b) die Achswellen (3) der Rollen (4, 4') von den beiden Seiten der Rollen (4, 4') vorstehen und ihre Endabschnitte in ein Paar paralleler Nuten (2, 2'; 102, 102') eingesteckt sind, die einander zugewandt offen sind und in den Seiten eines Paares von Tragbalken (101, 101') der Tragkonstruktion (1, 7) gebildet sind, die quer abständig voneinander sind und auf den gegenüberliegenden Seiten einer jeden Reihe von Rollen (4, 4') angeordnet sind,

c) die Achswellen (3) der Rollen (4, 4') gleitend in den genannten Nuten (2, 2'; 102, 102') von deren einem Ende einsteckbar sind,

d) stangenähnliche Abstandsteile (6) zwischen die Achswellen (3) der aufeinanderfolgenden Rollen (4, 4') zwischengesetzt und auf mindestens einer Seite einer jeden Reihe von Rollen (4, 4') angeordnet und in der jeweiligen Nute (2, 2'; 102, 102') untergebracht sind, in der die Achswellen (3) der genannten Rollen sitzen, **gekennzeichnet durch**

Rückhaltemittel, die von den Rollen (4, 4') getragen sind und zumindest teilweise die Mündungsöffnung der Nut (2, 2'; 102, 102') und jedes stangenähnliche Abstandsteil (6), das darin untergebracht ist, zumindest über einen Teil deren Länge überdecken derart, daß ein Herausgelangen dergenannten stangenähnlichen Abstandsteile (6) aus der jeweiligen Nut (2, 2'; 102, 102') verhindert ist.

2. Rollengestell nach Anspruch 1, dadurch gekennzeichnet, daß das Rückhaltemittel der stangenähnlichen Abstandsteile (6) durch die Haben (104) der Rollen (4, 4') gebildet ist, wobei sich die genannten Naben (104) mit. ihren Stirnflächen in eine Lage in Nähe der Mündungsöffnung der genannten Nut (2, 2'; 102, 102') erstrecken.

3. Rollengestell nach Anspruch 1, dadurch gekennzeichnet, daß das Rückhaltemittel der stangenähnlichen Abstandsteile (6) durch Zwischenscheiben, Ringe, Flanschstücke oder dergleichen gebildet ist, die auf den Achswellen (3) der Rollen (4, 4') in einer Lage in Nähe der Mündungsöffnung der Nut (2, 2'; 102, 102') vorgesehen sind.

4. Rollengestell nach einem oder mehreren der vorhergehenden Ansprüche, dadurch gekennzeichnet, daß die genannte Tragkonstruktion in Form mindestens eines U- oder V-förmigen Traggestelles ausgebildet ist, deren Stege (101, 101') die Tragbalken bilden, die an ihren Innenseiten mit den Längsnuten (2, 2') vorgesehen sind, die einander zugewandt liegen und die Endabschnitte der Achswellen (3) der aufeinanderfolgend zwischen den Stegen (101, 101') angeordneten Rollen des genannten geformten Traggestelles aufnehmen.

5. Rollengestell nach Anspruch 4, dadurch gekennzeichnet, daß das genannte U- oder V-förmige Traggestell mit Längsnuten (102, 102') auch auf den Außenseiten der Stege (101, 101') ausgebildet ist und daß mindestens zwei parallele und quer abständige Traggestelle (1) dieses Typs vorgesehen sind, wobei eine Reihe von Rollen (4') zwischen diesen zwei Traggestellen (1) angeordnet ist, wobei die Endabschnitte der Achswellen gleitend in den einander gegenseitig zugewandt liegenden äußeren Nuten (102, 102') der genannten zwei geformten Traggestelle (1) eingesteckt sind.

6. Rollengestell nach Anspruch 4 oder 5, dadurch gekennzeichnet, daß jedes geformte Traggestell (1) der Tragkonstruktion einen Basisflansch (201) zur Befestigung auf einem Tragteil (7) aufweist.

7. Rollengestell nach den Ansprüchen 4 bis 6, dadurch gekennzeichnet, daß das geformte Traggestell (1) der Tragkonstruktion aus einer Leichtmetallegierung und, vorzugsweise, durch einen Extrudiervorgang gebildet ist.

Fig. 1

Fig. 4

EP 0 279 037 B1

Fig. 2

Fig. 3